# EUROPEAN PATENT APPLICATION

(11) **EP 4 686 875 A1**
(43) Date of publication of application: **04.02.2026**
(21) Application number: 24191728.5
(22) Date of filing: 30.07.2024
(51) Int. Cl.: F24C 15/00, F24C 15/20, G06N 3/08, F24C 7/08

(54) **COOKING APPLIANCE COMPRISING A MULTIVARIATE SENSOR ASSEMBLY**

(71) Applicant: ELECTROLUX APPLIANCES AKTIEBOLAG, 105 45 Stockholm (SE)
(72) Inventor: GATTEI, Lorenzo, 47100 Forli (IT); CORAZZA, Flavio, 33080 Porcia (IT); DELLAROSA, Nicolò, 47922 Rimini (IT); CARNEVALI, Marco, 47924 Rimini (IT)
(74) Representative: Electrolux Group Patents

(57) **Abstract**

The present invention relates to a cooking appliance (1) comprising a cooking cavity (3) having an exhaust port (14), a service compartment (8), a cooling fan assembly (11), and a multivariate sensor assembly (12). The service compartment (8) is arranged adjacent to an outer face of the cooking cavity (3), and the cooling fan assembly (11) is arranged in the service compartment (8). The cooling fan assembly (11) comprises a cooling fan air-fluidly connected to the exhaust port (14) for sucking air from the cooking cavity (3), and an exhaust duct (15) with one or more walls enclosing an exhaust channel that extends between the fan (11) and an exit opening (20). The exhaust duct (15) is air-fluidly associated with the fan (11) such that an airstream (M, 19) generated by the cooling fan (11) from the cooking cavity (3) through the exhaust port (14) passes through the exhaust channel and is exhausted via the exit opening (20). A multivariate sensor assembly (12) is arranged in an exhaust duct wall section (23), with a sensing area (24) of the sensor assembly (12) directly facing the exhaust channel such that the airstream (M, 19) passes the sensing area (24) before exiting the exit opening (20).

## Description

The present invention relates to a cooking appliance, such as a cooking oven, comprising a cavity, such as a muffle, having an exhaust port, for example provided for exhausting gases released by food during cooking from the cavity.

According to some known cooking appliances, air drawn from the muffle may be analyzed and used for predicting a cooking status of a food item cooked in the muffle.

US 10,244,788 B2 describes a cooking appliance comprising a cooking chamber for accommodating a tray for cooking food items. The appliance comprises a controller for monitoring cooking, which receives an indication of a type of the food article within the cooking chamber. The controller is associated with a fluid analysis assembly which comprises a dilution chamber in which cooking vapors drawn from the cooking chamber and ambient air are mixed. Mixing the cooking vapor with ambient air is controlled via a valve associated with the dilution chamber, wherein the valve is configured for adjusting ambient air flow into the dilution chamber dependent on the indication of the type of food. Based on an analysis of the mixed air using a plurality of sensors and the food type, a done cooking status is predicted and alerted to a user when the cooking status is a done cooking status. The known appliance is comparatively complex with regard to predicting the done cooking status and may generate divergent prediction results in different operating environments.

EP 1 489 361 A2 describes a method of controlling a cooking process in a cooking oven. The method involves measuring a concentration of atmospheric gases within a cooking chamber of the oven, wherein one or more sensors for measuring the atmospheric gases within the cooking chamber are provided. The known method involves comparative complex signal processing of the sensor signals.

WO 2020/230056 A1 relates to household appliances such as kitchen hoods, steam ovens or electric ovens, comprising a plurality of transducers for detecting humidity, temperature and carbon dioxide concentrations in gases generated when a food item is cooked.

US 10,002,965 A describes a cooking apparatus comprising a cooking chamber and a gas sensor configured to detect a gas generated by a food item inside the cooking chamber. A controller is provided to determine a type of the gas and a concentration of the gas detected by the gas sensor based on a change in a resonant frequency of a component of the gas sensor, and to determine a cooking progress state of the food item in the cooking chamber. Information on the determined cooking progress state is transmitted to an external apparatus through a communication device to inform a user of the cooking progress state.

Albeit the known cooking appliances provide some solutions for predicting a cooking state of a food item, there is still room for improvement. In particular, it is desirable to improve cooking state prediction or determination with particular regard to reliability and accuracy. Further, there is still room for improvement with regard to ease of implementation, particularly with a broad area of application.

It is an object of the invention to provide a cooking appliance that addresses the above issues.

This object is solved by the combination of features of the independent claims. Embodiments result from the dependent claims and the exemplary embodiments described below and in connection with the annexed figures.

In accordance with an embodiment, a cooking appliance, or cooking oven, is provided. The cooking appliance, herein also referred to as appliance, comprises a cooking cavity unit comprising a cooking cavity or cooking chamber (or oven cavity), such as a muffle. The cavity shall be understood as a spaced defined by surrounding walls, such as a bottom wall, a top wall and three side walls, with a front opening to be closed with a front door of the appliance, wherein the cavity is adapted to accommodate food items for being cooking, for example placed on a tray.

The cooking cavity unit shall, in particular, be understood as a component of the appliance including the cooking cavity and associated with additional components such as thermal insulating elements or layers (thermal insulation) surrounding the cavity walls and/or housing elements, such as metal sheets, surrounding the cavity and the thermal insulation, for example a kind of chassis.

The cavity has an exhaust port, for example provided in the top wall. The exhaust port is adapted to draw or exhaust air from within the cavity. During cooking such air typically includes fumes or gases generated by a food item placed within the cavity during cooking. Provided that the exhaust port it is located in a top wall of the cavity, the exhaust port may also be considered as an exhaust chimney, enabling upward air extraction or exhaustion.

The cooking appliance may be configured for use as a built-in appliance or oven, wherein stand-alone appliances shall not be excluded.

The appliance further includes a service compartment or service area. The service compartment shall be considered as providing, at least in the installed configuration, e.g. when installed in a kitchen unit, a free space suitable for accommodating or housing one or more components such as electronics, exhaust or cooling fans, exhaust ducts, wiring and the like. The service compartment may for example be provided above the top wall of the cavity, and may be spaced from a corresponding cavity wall by intermediate insulation and housing components or cover elements surrounding or covering the cavity wall(s). The service compartment may at least in part be defined or delimited by walls of a chassis of the appliance, such as for example lateral side walls of the chassis delimiting or enclosing a space located at the top of the appliance, above the cavity. A base area of the service compartment may correspond to an area size of a corresponding vertical or horizontal cross section of the appliance and/or the chassis of the appliance. It is to be noted that the service compartment may be located at an upper or top side of the appliance. However, other locations such as on a lower side, at the back or at lateral sides shall not be excluded.

According to the embodiment, the service compartment or service area is arranged, defined or provided adjacent to an outer face of the cooking cavity unit. An outer face is to be understood as a surface or side of the cavity unit that is oriented outwardly when viewed from the cavity interior.

The appliance further comprises a cooling fan assembly, and a multivariate sensor assembly described in more detail below.

According to the embodiment, the cooling fan assembly is arranged in the service compartment, which may be considered a service compartment area or space. The cooling fan assembly comprises a cooling fan or exhaust fan that is air-fluidly connected to the exhaust port for sucking air from the cooking cavity. In other words, the cooling fan, herein also referred to as fan, is configured to extract or suck air from the cavity via the exhaust port, the exhaust port providing a fluidic connection between the cavity interior and the fan. The exhaust port may for example be associated with an opening in a wall, e.g. the top wall, of the cavity. Preferably, the interconnection between the exhaust port and a corresponding suction port of the fan is fluid-tight (air-tight), in particular, to prevent the fan from sucking external air via the interconnection provided by the exhaust port between the suction port of the fan and the cavity. In such embodiments, the exhaust port is configured such that the fan only draws air from within the cavity through the exhaust port and a corresponding input or suction port of the fan. However, in embodiments, the interconnection between the suction port of the fan and the cavity defined by the exhaust port may be adapted to enable the fan sucking external air in addition to air from the cavity interior. This means that the fan may be enabled so suck, via the exhaust port a mixture of ambient air and air from the cavity interior. In embodiments, the fan may comprise a separate suction port provided for sucking ambient air from the service compartment, meaning that the fan may be configured to suck air from the cavity via the exhaust port and from the service compartment via the separate suction port, resulting in a mixture of air drawn from the cavity and the service compartment. For the reason that the temperature in the service compartment is generally significantly lower than the temperature in the cavity, the temperature of air mixture to be exhausted may be considerably lower than that of the cavity interior. This is advantageous for avoiding hot air to be expelled from the appliance. Further, for the reason that the cooling fan assembly is arranged in the service compartment, ambient air is sucked from the service compartment, which air is, at least to some extent, decoupled from external environmental conditions, such as external humidity, external temperature, or substances present in the external environment, which means, that the air mixture expelled by the fan to a large extent mirrors the air or gas composition prevailing within the cavity during cooking.

The cooling fan assembly further comprises an exhaust duct with one or more walls enclosing or defining an exhaust channel that extends between the fan and an exit opening (or outlet opening) of the exhaust duct. The cooling fan assembly being arranged in the service compartment, implies that the cooling fan and the exhaust duct are arranged in the service compartment.

The exhaust duct is air-fluidly associated with or connected to the fan such that, in operation, an airstream generated by the cooling fan and including air sucked from the cooking cavity through the exhaust port passes through the exhaust channel and is exhausted via the exit opening.

According to the embodiment, one wall of the one or more walls of the exhaust duct comprises an exhaust duct wall section that merges into the exit opening. The outer side of this exhaust duct wall section faces away from the cooking cavity unit, which shall mean that the exhaust duct wall section is defined on side averted from the cooking cavity unit, in particular averted from the cavity. For example, the exhaust duct may be arranged and extend substantially parallel to a wall of the cavity, preferably substantially parallel to an upper wall of the cavity. If provided in an upper section of the appliance, and the exhaust duct wall section may then be arranged in an upper part or section of the exhaust duct. In particular, the exhaust duct wall section may, within the boundaries defined by the exhaust duct walls, be spaced at a greatest possible distance from the cavity relative to a fictitious line between the cavity center and the center of area of the exhaust duct wall section. By this, the exhaust duct wall section may be provided in an area of the exhaust duct that is associated with reduced thermal load caused by high temperatures within the cavity during cooking as compared to section closer to the cavity. Further, the exhaust duct wall section, facing away from the cooking cavity unit may be easily accessible, for example from top, which may be beneficial with regard to placing the multivariate sensor described below.

The expression merging into the exit opening in particular shall be understood in a sense that the exhaust duct wall section is located near and/or substantially immediately adjacent to the exit opening. For example, the exhaust duct wall section may be arranged at a position that is closer to the exit opening than to the fan following, for example, a flowline of an air stream generated by the fan and through the exhaust duct. This position may be considered advantageous because the further the distance from the fan, the lower the temperature of the air sucked from the (hot) cavity and exhausted via the exhaust duct. This may be beneficial with regard to placing the multivariate sensor at positions related to comparatively low temperature loads. Placement of the multivariate sensor is described in details below.

The multivariate sensor assembly is arranged in the exhaust duct wall section, with a sensing area of the sensor directly facing the exhaust channel, in particular the interior of the exhaust duct channel, such that the airstream passes the sensing area before exiting the exit opening.

As mentioned above, the placement of the multivariate sensor in the exhaust duct wall defined above is advantageous with regard to lowering the temperature load caused by air sucked from the cavity and with regard to improved accessibility of the multivariate sensor, for example in connection with maintenance and repair. Further, the suggested arrangement of the multivariate sensor is suitable for use with known cooling fan arrangements without requiring substantial redesigns.

In embodiments, the multivariate sensor assembly is configured to detect in the airstream, in particular air mixture, generated by the cooling fan in or through the exhaust channel at least two, three or more organic substances (Volatile Organic Compounds, VOC) that are exhausted by a food item during a cooking process into the cavity. For the reason that the cooling fan assembly is arranged in the service compartment, and if air from the service compartment is mixed with air drawn from the cavity, possible adverse influences from substances present in the outer environment of the appliance, such as in a kitchen environment, may be avoided. Hence, the substances generated by the food item may reliably be detected. As mentioned air from the service compartment may be mixed with the air drawn from the cavity to lower (cool) the temperature of the exhaust air stream. On the one hand, this may be to avoid burning hazards for example user's hands coming close to the exhaust duct. On the other hand, the multivariate sensor may be protected from high temperature loads otherwise generated by the hot (uncooled) air drawn from the cavity. As mentioned cooling may be obtained by mixing the air drawn from the cavity and air from the service compartment. However, active cooling arrangements or elements for cooling the airflow passing the sensing area shall not be excluded. Drawing air from the service compartment may also provide a cooling effect within the service compartment, which may be advantageous for cooling components, such as electronic components, arranged in the service compartment and for avoiding accumulation of heat within the service compartment.

In embodiments, the appliance further comprises a control unit, wherein a trained model is implemented on the control unit. The model is trained based on a plurality of training data sets each providing, for respectively one or more food items, associations between a cooking degree of the one or more food items and related exhaust of one or more organic substances (VOC). The control unit is configured to receive sensor signals of the multivariate sensor assembly and use these sensor signals as input data for the trained model, which may be a neuronal network, machine learning model (e.g. SVM classifier) or similar. By applying the input data to the trained model, a cooking degree for a food item present in the cavity during cooking is determined or predicted. By using the multivariate sensor assembly, the control unit is able to predict the cooking degree or status without knowing the food item, type of food and/or food item weight. In particular, the control unit may be adapted to determine the cooking degree or status based on the trained model by using the signals of the multivariate sensor as (the only) input data for the trained model and to output data of the trained model as the cooking degree/status or as data representative of the cooking degree/status.

In particular due to the advantageous placement of the multivariate sensor and the avoidance of external environmental influences, the cooking degree, such as a level of doneness, may be determined comparatively reliably and accurately, in particular substantially regardless of the installation location of the appliance, or at least under conditions reducing possible environmental impacts as compared to solutions sucking air from an environment outside of a compartment or housing accommodating the appliance. Further, and as mentioned, the control unit may determine the cooking status or degree solely based on the signals from the multivariate sensor, without requiring additional input data such as a cooking time and/or type or kind of food etc. The advantageous placement of the sensor assembly in an area of the exhaust duct exposed to comparatively low temperatures enables the use of MOS sensors, which are generally limited to low temperature environments, and which have been found to be efficient for detecting VOCs. Using several of such sensors enables detecting the cooking status or degree based on the sensed VOCs only.

In an embodiment, the cooling fan comprises a first input port that is air-fluidly connected via the exhaust port to the cavity, a second input port that is air-fluidly connected to or opens into the service compartment, and an output port. The output port is air-fluidly connected to or opens into the exhaust duct. The fan is configured such that, when in operation, air is sucked from the cavity and service compartment via the first and second input ports, and an airstream comprising a mixture of air sucked from the cavity and the compartment is generated and exhausted through the exhaust duct, past the sensing area, and out of the exit opening to the outer environment of the appliance. As discussed above, the air mixture may be advantageous for reducing the temperature load to the sensor caused by the airstream passing by. Further sucking air from the service compartment may provide a cooking effect for the service compartment.

In preferred embodiments, the exhaust duct wall section is tapered towards the exit opening, or the exhaust duct wall section is provided in a tapered section of the exhaust duct. Providing the exhaust duct wall section in a tapered area of the exhaust duct may be advantageous with regard to exposing sensing components, in particular the sensing area, of the senor with the airstream, which may lead to improved sensing accuracy and reliability. Further, such an arrangement may be considered beneficial with regard to flow dynamics related to the airstream generated by the fan. In particular, it was found that such tapered sections may be associated with smooth or laminar flow conditions (rather than turbulent flow conditions and vortex generation), which is beneficial for the sensor signal generated from the airstream accurately mirroring the composition and (relative) substance quantities of the air within the cavity. In other words, the exhaust duct wall section, and therefore the multivariate sensor, is preferably arranged in an area or section of the exhaust duct, in particular near or close to the exit opening, in which the fan, when in operation, generates a laminar or substantially laminar, airstream through the exhaust duct or within the exhaust channel. Generally speaking, the sensor assembly, preferably the sensing area, may be located in a section of the exhaust duct, in which, during ordinary operation of the cooling fan, the airstream generated by the fan and passing the section represents is substantially uniform or consistent, in particular smooth or laminar. This is efficient for accurate VOC detection.

In preferred embodiments, and as indicated above the multivariate sensor assembly is mounted near or close to the exit opening. Respective mounting positions may be advantageous with regard to lower temperature load and laminar or smooth flow conditions.

In embodiments, the multivariate sensor assembly is mounted such that a first distance between the fan and the sensor assembly, in particular the sensing area, is larger than a second distance measured between the sensor assembly, in particular the sensing area, and the exit opening, the first and second distances respectively measured along a centerline of the exhaust duct or a centerline flowline of the airstream generated by the fan and passing through the exhaust duct. The distances may be measured for example from a center point of the sensor assembly or a side of the sensor assembly or sensing area and a center point of an output port of the fan.

In embodiments, the first distance is at least twice, preferably at least three times as large as the second distance.

In embodiments, the sensor assembly, preferably the sensing area, is located in a section of the exhaust duct, in which, during ordinary operation of the cooling fan, a velocity, in particular an average velocity, of the airstream generated by the fan through the exhaust duct is at least one of in a range from 15% and 85%, and a range from 30% and 60% of a maximum airstream velocity within the exhaust duct. Respective sections can easily be determined for a given exhaust duct and exhaust duct design based on aerodynamic considerations, in particular measurement, calculations or simulations. The mentioned range(s), are advantageous with regard to avoiding sensor placement in regions leading to biased or unfavourable measurements not representative of the substances (VOC) or substance concentrations in the cavity. In this connection the airstream velocity shall be understood as the velocity of the airstream, or flow velocity, measured along the exhaust duct. Regarding for example regions involving turbulent flow dynamics or vortexes, while the velocity of the air particles may be high, the (average) flow velocity of the airstream is low, under- or over-representing the substance or substance-mix concentration in the cavity. Regarding relatively high flow velocities, the measurements by the sensor assembly may also be faulty and not be representative of the substances actually generated by the food in the cavity.

In embodiments, the cooling fan is a radial or centrifugal fan, preferably with curved impeller blades. The fan comprises an impeller having an axis of rotation that is perpendicular to a wall, preferably an upper wall, of the cavity. In other words, a rotational plane of the impeller may be parallel to this wall.

In embodiments, a width of the exhaust duct, measured in a plane perpendicular to the axis of rotation (or parallel to the rotational plane), increases in a funnel-shaped, spiral manner from the output port of the fan towards the exit opening. In preferred embodiments, the exit opening extends substantially over the whole width, in particular the frontal width, of the cooking appliance measured, for example, in a plane perpendicular to the axis of rotation. The width may for example be related to a frontal width of a control interface covering the service compartment at the frontal side of the appliance. The exit opening may extend over the frontal width between a first end and a second end, which may define lateral ends of the exit opening.

The sensor assembly, preferably the sensing area, may in embodiments be located in an area in which a curvature of flowlines of the airstream within the exhaust duct and near the exit opening is in a range from 0 to C_{med}, wherein C_{med} represents the average or median of airstream curvatures prevailing over the width of the exit opening measured perpendicularly to the axis of rotation. Such regions have been proven suitable for obtaining sensor signals adequately mirroring the substance(s) (VOCs) or their concentrations in the cavity.

In embodiments, the fan is a radial or centrifugal fan with an impeller, with an axis of rotation of the impeller being perpendicular to a wall, preferably an upper wall, of the cavity, wherein a width of the exhaust duct, measured in a plane perpendicular to the axis of rotation, increases in a funnel-shaped, spiral manner from the output port towards the exit opening. The exit opening preferably extends substantially over the whole width of the appliance, and in a plane perpendicular to the axis of rotation between a first end and a second end. The sensor, in particular the sensing area is located in a region located near the exit opening and confined between a first and a second fictitious line. The first fictitious line is drawn, following a tangential velocity of a tip of the impeller, from a first point of an outer circumference of the impeller, or of a casing surrounding the impeller, to the first end. The second fictitious line is drawn, following a tangential velocity of a tip of the impeller, from a second point of an outer circumference of the impeller or the casing of the impeller, to the second end. The second point is located downstream the first point relative to the direction of rotation of the impeller, which may be downstream the direction of the airflow generated by the impeller. Providing the sensor within the area defined or confined between the two fictitious lines has been found advantageous for obtaining appropriate measurements regarding the substances (VOCs) generated by food cooked in the cavity.

According to particularly preferred embodiments, the sensor assembly comprises at least one metal-oxide-semiconductor (MOS) sensor, the MOS sensor is adapted to sense one or more organic substances generated by food being cooked in the cavity. It has been found that MOS sensors are particularly suitable for determining respective substances in an accurate and reliable manner. In particular, MOS sensors are suitable for use and placement in the areas identified above, which areas may be considered as optimal for MOS-based sensing regarding flow velocity and/or temperature of the airstream and/or relative amount of substances (VOC) as compared to the cavity interior.

In embodiments, the sensor assembly comprises two or more sensor units respectively configured for detecting at least one organic substance, and wherein the control unit is configured to determine, based on the trained model, the cooking degree from on a response pattern originated from a combination of two or more signals of the sensor units. In this connection, the response pattern may be used as input data for the trained model to generate output data representative of the cooking degree or cooking status of the food item. Using a sensor assembly that is sensitive for a plurality of, i.e. two or more, different substances, contributes to obtaining precise and accurate results, without necessitating input data indicating cooking time, food type, weight, or size etc.

In particular, it has been found by testing under real cooking conditions that the cooking degree or cooking status determined based on the sensor signals, in particular the response pattern, and the trained model is in good correspondence and appropriately or optimally mirrors the actual cooking degree or cooking status of the food item in the cavity. These optimal results can in particular be obtained by using MOS sensor technology, e.g. one or more MOS sensors, placed in accordance with the above embodiments in specified areas of the exhaust duct.

In embodiments, the sensor assembly is attached to an outer wall of the exhaust duct, and air-tightly overlaps or closes an opening in the outer wall, the opening defined in or by the exhaust duct wall section. The sensing area of the sensor assembly attached accordingly faces the interior of the exhaust duct or projects into the exhaust duct. The sensing area may, as mentioned, project at least to some extent, into the exhaust duct. It is also possible that the sensing area is substantially flush with the exhaust duct in the area of the exhaust duct wall section, or that the sensing area is, at least slightly, set back relative to the opening plane of the opening. Such an attachment enables a comparative easy and technically simple implementation combined with good or optimal sensing results, in particular cooking status or cooking level predictions or determinations.

In embodiments, the cavity comprises a bottom wall, a top wall, three sidewalls connecting the bottom and top walls and a front opening. A front door may be provided for closing the front opening during cooking.

With such a configuration of the cavity:
- the service compartment and the cooling fan assembly, which includes the cooling fan and exhaust duct, may be arranged in a section above the top wall;
- the exhaust port may pass through the top wall and may be connected to the first input port;
- the second input port of the fan may be air-fluidly connected to or open into the service compartment, in particular a space defined by the service compartment.

Further, with such a configuration:
- the exhaust duct, in particular the exit opening, may extend substantially over the whole width of a front surface of the cooking appliance; and
- the exit opening may open into or at a space between an upper side of a front door configured for closing the front opening and a lower side of a front panel, in particular an upper front panel, e.g. a frontal control panel, covering a frontal side of the service compartment.

Such a configuration is advantageous with regard to usage of space and exhaust of the air. In particular exhausting the air at the front side described above between the door and the front panel is advantageous with regard to simple duct routing and obtaining appropriate laminar flow areas for placement of the sensor assembly.

In embodiments, the cooking appliance may comprise an outer housing and/or a chassis, that may least partially surround or cover the cooking cavity unit and service compartment. Such embodiments may be related to built-in appliance types and stand-alone appliance types.

Non-limiting embodiments of the present invention will now be described, by way of example, with reference to the accompanying drawings. Same or functionally corresponding elements are referenced with same reference signs. The drawings need not be to scale. In the drawings:
- FIG. 1 is a cross-sectional view of a cooing appliance, such as a baking oven;
- FIG. 2 is a 3D sectional view of the cooking appliance;
- FIG. 3 is a detail of the cross-sectional view of FIG. 1;
- FIG. 4 relates to a first top view of the cooking appliance;
- FIG. 5 shows an illustration indicating a flow velocity of an airstream;
- FIG. 6 relates to a second top view of the cooking appliance;
- FIG. 7 shows an example for a sensor of a sensor assembly;
- FIG. 8 shows a sensitivity diagram of a sensor;
- FIG. 9A to 9C show further sensitivity diagrams; and
- FIG. 10 and 11 relate to an exemplary embodiment of an impeller for a cooling fan.

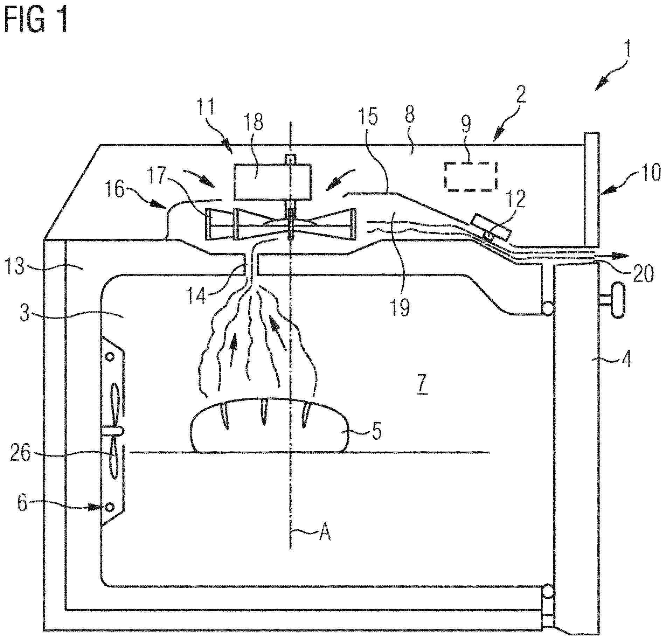

FIG. 1 is a cross-sectional view of a cooking appliance 1, such as a baking oven. The cooking appliance 1 may for example be implemented as a built-in oven.

The cooking appliance 1 (referred to in short as appliance 1 below) comprises an oven chassis 2 (frame, scaffold or supporting structure) for supporting components of the appliance and/or for covering parts of the components.

The appliance 1 comprises a cavity 3 defined by a bottom, top, and three side walls. The cavity 3 is open at one side called the front side. A corresponding opening is closed by a door 4, which is provided for enabling the insertion of food 5 (e.g. a piece of dough) or food items into the cavity 3. The door 4 may be hinged in order to rotate around one of the edges of the front side, preferably a lower horizontal edge. The door 4 covers the front area of the cavity 3.

The cavity 3 has means for supporting food 5, such as oven shelves for supporting one or more trays for placing food 5 within the cavity 3.

Heating means 6 are associated with the cavity 3, and are adapted to heat the cavity interior 7. The heating means 6 may include: one or more heating elements (e.g. resistance heating elements) exposed to the cavity interior 7 or located outside of the cavity 3, microwave (MW) heating means, gas burner heating elements, steam cooking elements, but are limited to such heating elements.

In the example of FIG. 1, the heating means 6 comprises a ring shaped sheathed heating element.

Above the door 4 and cavity 3, there is a service compartment 8, which, in the given example, is still contained in the oven chassis 2. According to the embodiment of FIG. 1, this service compartment 8 hosts a control unit 9, which may comprise an electronic board and/or one or more processors or data processing units, able to receive instructions from a user interface provided at a frontal control panel 10.

The control unit 9 is adapted and configured for selectively activating the electric loads of the appliance, such as heating means 6, a fan 11, a cavity illumination and the like.

The electric loads are activated at least in part based on algorithms implemented on the control unit 9, that may utilize data acquired from signals generated by a (i.e. at least one) sensor assembly 12, which may comprise a sensing area with one or more sensors for sensing temperature, humidity and/or one or more sensors for detecting one or more organic substances as described in further detail above and below. In particular, in one operational mode, the appliance 1, more specifically the control unit 9, may be operable to detect or determine a cooking status or cooking degree of a food 5 placed in the cavity 3 based on sensor signals or a response pattern determined from such signals detected by one or more sensors adapted to sense one or more organic substances generated by the food 5 while being cooked, which is described on more detail below.

The sensing area or the one or more sensors may include an MOS sensor, which will be described in further detail below, and may further comprise a cavity thermal sensor (not shown). The sensor assembly and sensing area referred to below in particular relate to sensor(s) suitable for detecting one or more organic substances (VOC).

On the control unit 9, a trained mathematical model may be implemented, as described further above and below, the model for determining of predicting a cooking state or cooking level of the food based on the sensor signals as input parameters for the model.

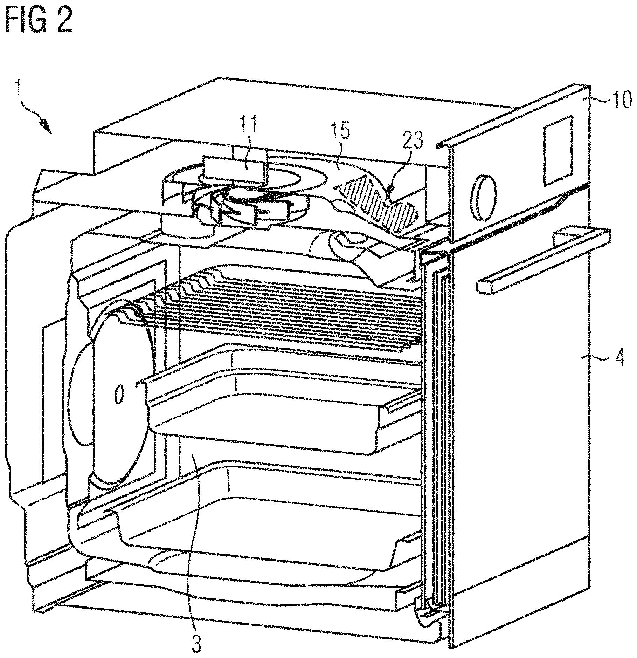

As can be seen from FIG. 1 and FIG. 2, a front surface of the service compartment 8 is covered with the control panel 10, which is substantially flush with the front surface of the door 4.

The control panel 10 may host, as components of the user interface, a visual feedback means and input means for controlling the oven.

The cavity walls of the cavity 3 are surrounded by an insulation layer 13, that has a certain thickness and is configured for thermal insulating the cavity. The cavity 3, the cavity walls and the thermal insulation 13 may be considered as part of a cooking cavity unit installed in the chassis 2.

The cavity 3 comprises an exhaust port 14, preferably and without limitation located in the cavity's upper side or top wall, which may be identified as the "roof" of the cavity 3.

Inside the service compartment 8, there is another space or service space, e.g. a delimited space, which in the present example represents an exhaust duct 15, and which may also be called a "cooling channel". The exhaust duct 15 is defined by a boundary wall made of metal or plastic, wherein the boundary wall encloses an exhaust duct channel represented by the inner volume of the exhaust duct 15.

In the given example, the boundary wall delimits the exhaust duct channel, wherein the boundary wall, formed e.g. from sheet metal in one piece, may be attached to an outer wall of the chassis 2, wherein this outer wall may define a bottom wall of the exhaust duct 15.

In the given examples, the boundary wall and the bottom wall also define a fan housing 16 for accommodating an impeller 17 of the fan 11. This housing has the form of a volute. The impeller 17 is connected to a drive motor 18 for driving the impeller 17. In the given example, the fan is 11 implemented as a radial or centrifugal fan 11, in which the axis of rotation A of the impeller 17 is perpendicular to an airstream 19 generated by the fan 11 (at least with regard to the immediate proximity of the impeller 17). Further, the axis of rotation A is perpendicular to the top wall.

The exhaust port 14 is in fluid communication with the exhaust port 14, i.e. it is air-fluidly connected to the exhaust port 14. The exhaust port 14 is configured for enabling the fan 11 to suck air from the cavity 3.

The exhaust duct 15 extends between the fan 11 and an exit opening 20 thereof. The exit opening 20 is arranged in a space between the control panel 10 and the upper side of the door 4 when closed. Following the airstream from the fan 11 to the outlet opening 20, a height or diameter of the exhaust duct 15 or exhaust channel, relative to vertical cross sections, gradually decreases, in particular near and towards the exit opening 20. Preferably, the width of the exit opening 20 extends substantially over the whole width of the appliance 1, such as over the width of the control panel 10 and/or the width of the door 4.

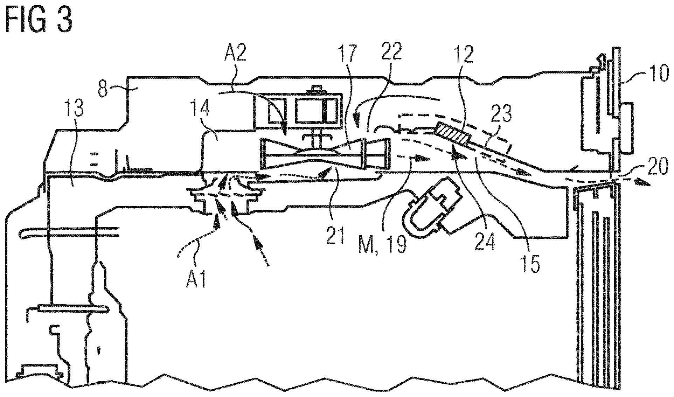

The exhaust duct 15 is in air-fluid communication with the fan 11 such that, when operating the fan, the airstream 19 generated by the fan 11, including air sucked from the cavity 3 through the exhaust port 14, passes through the exhaust duct 15 and is exhausted at the exit opening 20. In particular, the exhaust port 14 is connected to a first input port 21 associated with the fan 11 (FIG. 3).

In the given example, the fan 11, or in more detail, the fan housing 16, includes one or more (fixed) openings providing an air-fluid connection between the impeller 17 and the service compartment 8. The one or more openings represent a second input port 22, wherein, in operation, the fan 11 also sucks air from the service compartment 8 via these one or more openings.

This means, in operation, the fan 11 rotates around the vertical axis A, sucks air in axial direction from the cavity 3 and the service compartment 8, and expels the mixed air in radial direction through the exhaust duct 15 and finally through the exit opening 20 to the environment. This means, that, in operation, the fan 11 may suck hot air including substances (VOC) generated by food cooked in the cavity, from below and relative cool air from the service compartment 8 from above, and expel the gas mixture via the exit opening 20.

As can be seen in more detail in FIG. 3, the fan 11 has two fluid inlets, represented in the give example by the first and second input ports 21, 22, which are arranged above and below the impeller 17, respectively. The fluid inlets are located approximately in the area of the axis of rotation A.

With continued reference to FIG. 3, an upper side of the exhaust duct, in more detail an upper wall of the exhaust duct 15 that is oriented and located in an area averted from the cavity 3, includes or defines an exhaust duct wall section 23. In the exhaust duct wall section 23, the sensor assembly 12 is provided, the sensor assembly 12 comprising, for example a multivariate sensor, comprising one or more MOS sensors, for detecting one or more organic substances generated by food 5 being cooked or heated in the cavity 3.

The exhaust duct 14, fan 11, and the exhaust duct wall section 23 that includes the sensor assembly 12 are designed and implemented such that the air mixture M and a corresponding airstream 19 generated by the impeller 17 of the fan 11 by mixing i) air A1 sucked from the cavity 3 and ii) air A2 sucked from the service compartment 8 and expelled by the fan 11 passes a sensing area 24 of the sensor assembly 12, which faces the exhaust duct 15.

During a cooking process, the food 5 will release a gas mixture, including for example one or more organic substances (VOC), that will take the path as described above: it will be sucked up by the fan 11 through the exhaust port 14 and subsequently blown radially by the fan 11 towards the exit opening 20. Before reaching the exit opening 20, the air mixture M or airstream 19 will impinge on the sensing area 24. Accordingly, the sensor assembly 12, which is configured for detecting one or more corresponding substances, is able to detect respective substances.

Based on the trained model implemented in the control unit 9, the control unit 9 determines or calculates, based on the sensor signals or a response pattern generated therefrom as input parameters for the trained model, a cooking state or degree of the food 5 as an output parameter. The control unit 9 may, depending on the determined cooking state or degree, operate the loads of the cooking appliance 1, e.g. the heating means, the fan 11, a convection fan 26 (in case that the appliance is a convection oven of includes such operational modes), a display of the control panel 10 and other loads. For example, if the cooking status indicates "unfinished" the control unit 9 may instruct to continue cooking, wherein it is possible for the control unit 9 to adapt cooking parameters (e.g. heater power etc.,) depending on the status. Similarly, the control unit 9 may instruct the fan 11 to continue operation, for example with same or different (higher/lower) speed. Further, the control unit 9 may indicate the cooking status on a display of the control panel to inform a user accordingly. On the other hand, if the cooking status indicates "finished", the control unit 9 may stop cooking or initiate a finishing cooking routine, may instruct the fan 11 to stop or continue for a predetermined residual time (same seed or different from previous speed), and may cause the display to alert the cooking status etc.

In all, the sensor assembly 12 is arranged in the exhaust duct wall section 23, with the sensing area 24 of the sensor assembly 12 directly facing the exhaust channel of the exhaust duct 15 such that the airstream 19 and air mixture M pass the sensing area 24 before exiting the exit opening 20, wherein the air mixture M includes air sucked from the cavity 3 and the service compartment 8 through the inlet ports 21, 23.

The sensor assembly 12 is preferably constituted by an array of least three sensors of MOS type. Each sensor of the sensor assembly 12 or array may be adapted to sense one or more than one (multiple) of the substances relevant for determining the cooking degree or status. In case that a sensor is able to detect several substances, such a sensor may provide multiple outputs or a single output comprising a combination of single sensor signals, which may be merged into a single output signal.

According to preferred embodiments, shown for example in connection with FIGs. 1 to 3, the exhaust duct wall section 23 is tapered towards the exit opening 20. In particular, the exhaust duct wall section 23 may be arranged in a tapered wall of a funnel-shaped section of the exhaust duct 15.

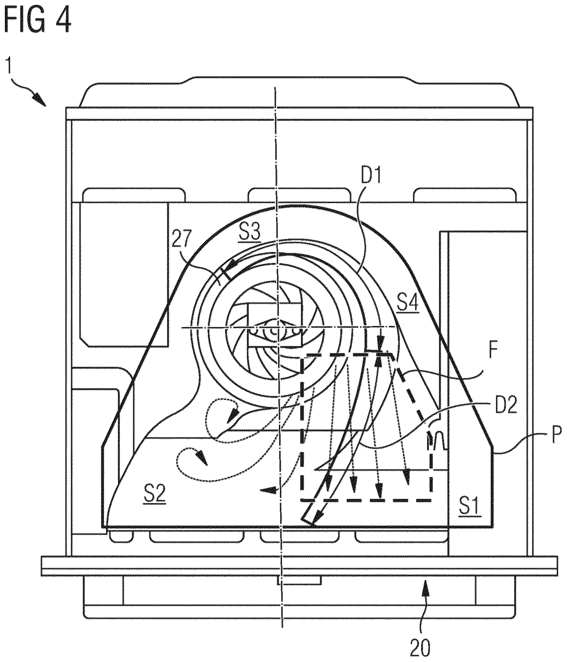

The sensor assembly 12 may be mounted such that a first distance D1 between the fan 11, more precisely an output port 27 (FIG. 4) of the fan 11 and the sensor assembly 12, in particular the sensing area 24, is equal to or larger than a second distance D2 measured between the sensor assembly 12, in particular the sensing area 24, and the exit opening 20, the first and second distances D1, D2 respectively measured along a centerline, represented for example by a flowline 28 of the airstream of the exhaust duct 15. In FIG. 4 a spiral flowline 28 is shown, and distances D1 and D2 are sketched accordingly.

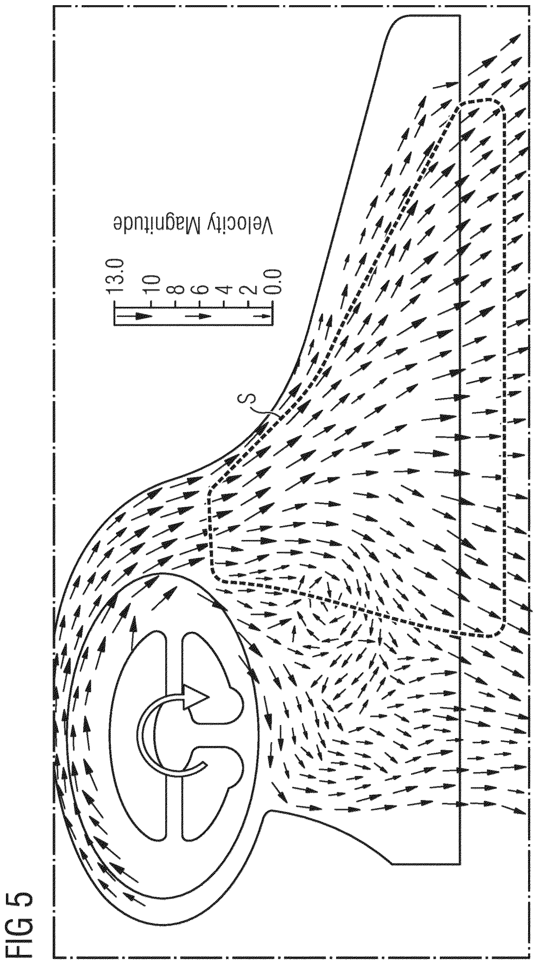

According to embodiments, sensor assembly 12, preferably the sensing area 24, is located in a section of the exhaust duct 15, in which, during ordinary operation of the fan 11, the airstream 19 generated by the fan 11 and passing the section is substantially uniform or consistent, in particular smooth or laminar. In FIG. 5 flowlines of the airstream 19 are sketched and a corresponding location is indicated by a dashed line defining an area suitable for placement of the sensor assembly 12. As can be seen from FIG. 4, flowlines left to the sketched area are not laminar, and may include vortexes or turbulences. Such flows, having a low average flow velocity with regard to the airflow from the fan 11 to the outlet opening 20, may not mirror or be representative of the substances or relative substance concentrations prevailing within the cavity 3 during cooking.

According to embodiments, a suitable mounting area for the sensor assembly 12 or sensing area 24 may be such that, during ordinary operation of the cooling fan 11, a velocity of the airstream generated by the fan 11 through the exhaust duct 15 is at least one of in a range from 15% and 85%, and a range from 30% and 60% of a maximum airstream velocity within the exhaust duct 15. The area surrounded in FIG. 4 by the dashed line may be representative of respective mounting locations.

According to embodiments, the mounting area for the sensor assembly 12 may be defined as follows: Given a radial fan 11 as in the above example, with a width of the exhaust duct, measured in a plane perpendicular to the axis of rotation, increasing in a funnel-shaped, spiral manner from the output port 27 of the fan 11 towards the exit opening 20, and given that the exit opening 20 for example extends substantially over the whole width of the appliance, the sensor assembly 12 or the sensing area 24, may be located in an area in which a curvature of flowlines of the airstream 19 within the exhaust duct 15 and near the exit opening 20 is in a range from 0 to C_{med}. C_{med} represents the average or median of airstream curvatures prevailing over the width of the exit opening 20 measured perpendicularly to the axis of rotation A. Such curvatures for example prevail in the area marked as F any by a dashed line in FIG. 4.

Expressed in different terms, based on ta top view of the cooking appliance 1, the fan 11, and the exhaust duct 15, when diverting a virtual top viewing plane by two lines which are perpendicular to each other, pass through the axis of rotation A, and are perpendicular to the axis of rotation A into four sections S1...S4, one of the areas, i.e. the area S1 in FIG. 4, represents a suitable mounting area for the sensor assembly 12. Two of these sections, i.e. S1 and S2 are located in in a frontal section of the virtual plane P, i.e. a section adjacent or near at the front of the cooking appliance 1, wherein section S1 defines an area suitable for sensor mounting. The section S1 is, considering the length of the flow path or the airstream 19 within the exhaust duct 15 from the output port 27 to the exit opening 20, (in average) closer to the output port 27 as compared to the other frontal section S2. The area of overlap of the upper wall or the exhaust duct 15 and the section S1 includes suitable mounting locations for the sensor assembly 12.

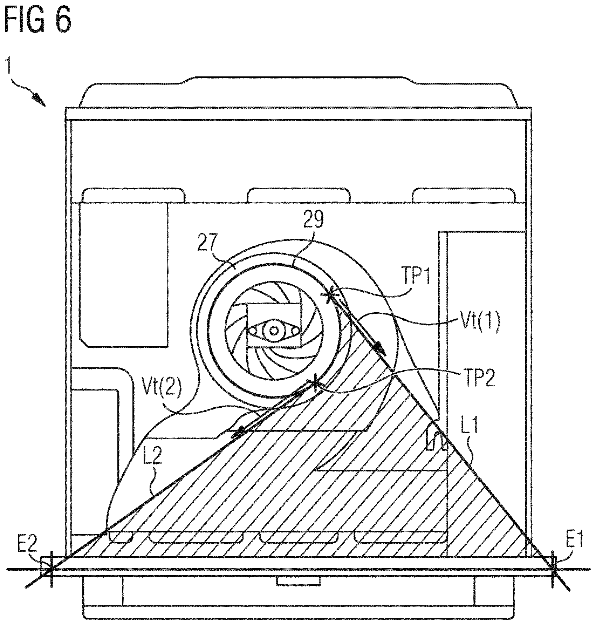

In an embodiment illustrated in connection with FIG. 6, and given that the fan 11 is a radial fan with impeller 17 having an axis of rotation A that is perpendicular to the upper wall the cavity 3, for example, with a width of the exhaust duct 15, measured in a plane perpendicular to the axis of rotation A increasing in a funnel-shaped, spiral manner from the output port 27 towards the exit opening 20, the exit opening, preferably extending, substantially over the whole width of the cooking appliance 1 and in a plane perpendicular to the axis of rotation A between a first end E1 and a second end E2, a suitable mounting area for the sensor assembly 12, i.e. a suitable location for the exhaust duct wall section 23, may be as follows:

The mounting area is located in a region located near the exit opening 20 and confined between a first and a second fictitious line L1, L2.

The first fictitious line L1 is drawn, following a tangential velocity Vt(1) of a tip of the impeller 17, from a first point TP1 of an outer circumference of the impeller 17, or of a casing of the impeller 17, to the first end E1. The first line L1 may be considered as a first tangent to the impeller 17, or the casing of the impeller 17.

The second fictitious line L2 is drawn, following a tangential velocity Vt(2) of a tip of the impeller 17, from a second point TP2 of an outer circumference of the impeller 17, or the casing of the impeller 17, to the second end E2. The second line L1 may be considered as a second tangent to the impeller 17, or the casing of the impeller 17.

The second point TP2 is located downstream to the first point TP1 relative to the direction of rotation of the impeller 17 or the airstream 19 generated by the impeller 17. The area confined or defined between the two fictitious lines L1 and L2 in a (fictitious) plane that is perpendicular to the axis of rotation A is highlighted by a hatching in FIG. 6.

A suitable mounting area may be considered as a region of overlap between the hatched area and the exhaust duct 15, preferably located in a tapered section of the exhaust duct 15 towards the exit opening 20. This means the to the exhaust duct wall section 23 may be selected to be within this mounting area.

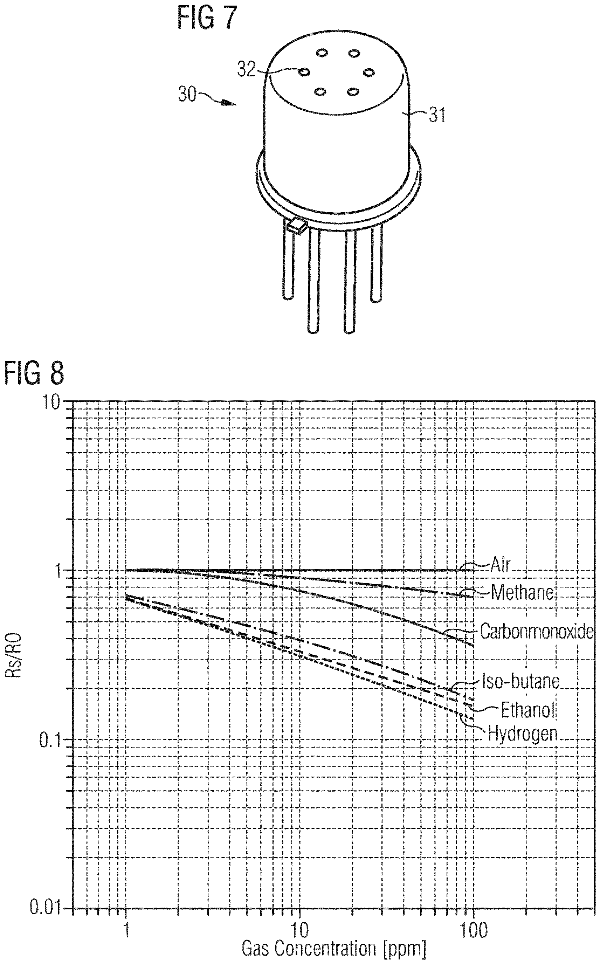

FIG. 7 shows (not to scale as compared the FIG. 1 to 6) an example of a sensor 30 of the sensor assembly 12. The sensor 30 may be a MOS sensor for detecting one or more substances generated by food during cooking or baking. The sensor 30 may include an outer housing 31 shielding sensing elements accommodated therein, and having one or more "sniffer" openings 32 penetrating through the housing 31. The "sniffer" openings 32 enable gaseous substances included in the airstream 19 passing through for detection by the sensing elements. Mounting locations for the sensor assembly 12 discussed above are particular suitable for such a sensor 30 and enable comparatively exact and reliable detection of respective substances. Further, the mounting locations are advantageous with regard to flow velocity, uniform flow characteristics and temperature load of the sensor(s). Specifically, the given boundary conditions of the locations for the sensor provide advantageous temperatures regarding the fact that the fan 11 sucks hot air from the cavity 3, and provide advantageous locations for detecting the substances representative of the substances and relative substance concentrations within the cavity 3.

Some MOS (Metal Oxide Semiconductor) sensors are particularly sensitive to concentration of various types of gases. A variation of resistance of the metal oxide due to adsorption of gases may be measured and used as a signal input by the oven control unit, in particular for input parameters for the trained model (the trained model described in more detail further above). Such sensors may be specific to several gas compounds.

FIG. 8 shows a sensitivity diagram (Rs/R0 vs. analyte concentration) of a corresponding sensor, 30 configured and suitable for sensing substances such as air methane, carbon monoxide, IOS-butane, Ethanol, and Hydrogen. Rs/R0 is the ratio expressing the relative change in the resistance of the sensor when it is exposed to a target analyte or substance compared to its baseline resistance in the absence of the analyte or substance.

For obtaining accurate prediction results for the cooking degree or cooking level, several sensors may be used, respectively sensitive to different substances or analytes.

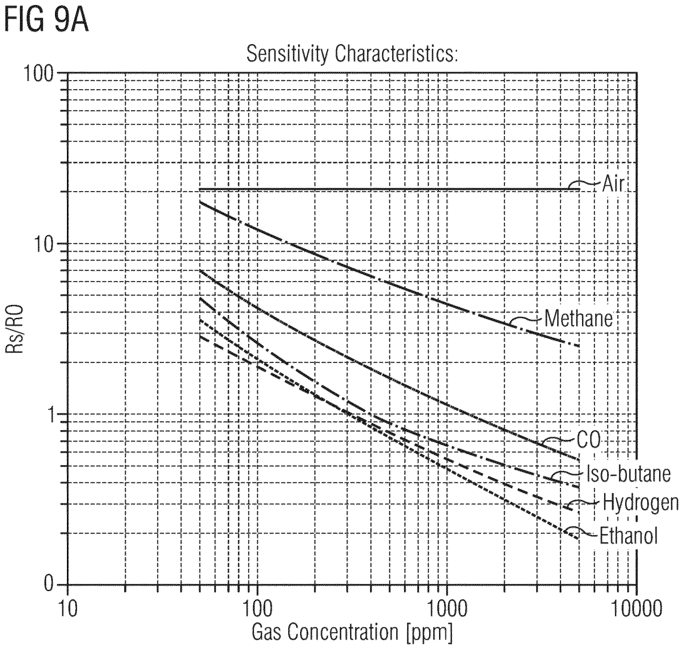

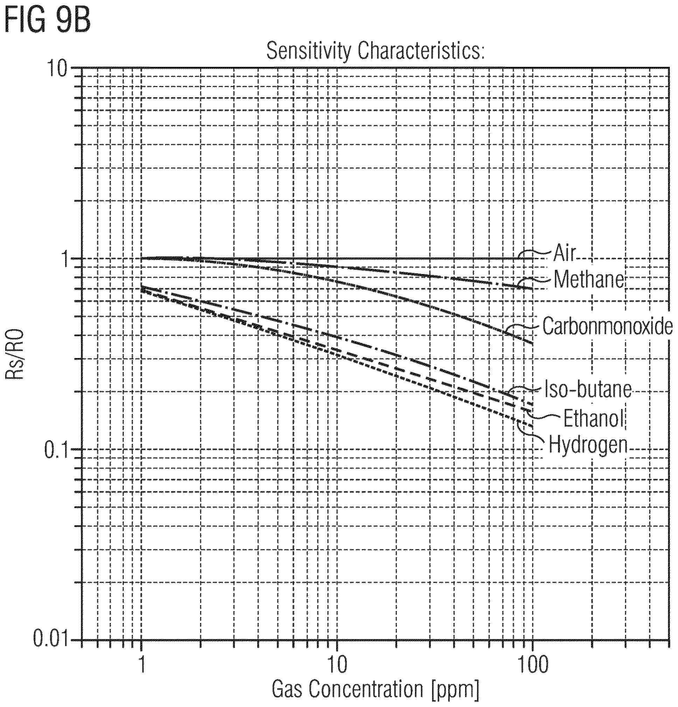

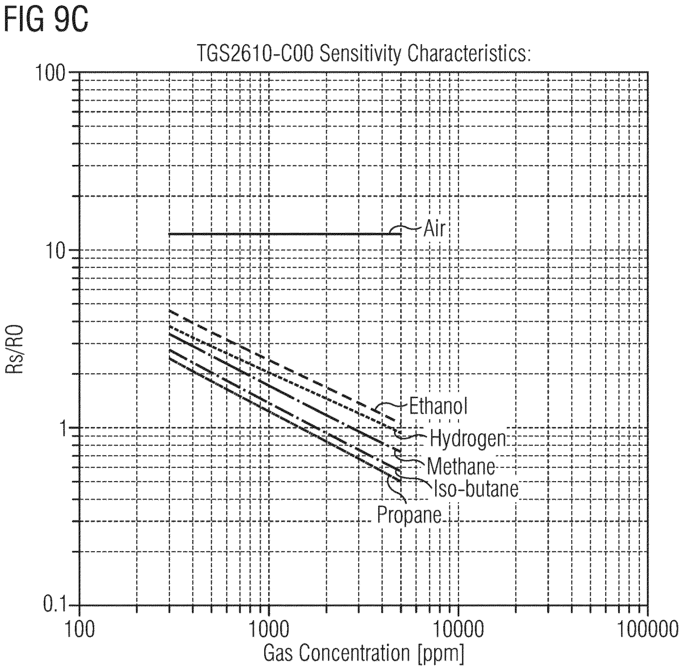

FIG. 9A to 9C show sensitivity diagrams (Rs/R0 vs. analyte concentration) of three different sensors, which may be used in combination for the sensor assembly 12, the sensors sensitive for different groups of analytes and having different specific sensitivities, e.g. [air, methane, CO, iso-butane, hydrogen, ethanol], [air, methane, CO, iso-butane, ethanol, hydrogen], and [air, ethanol, hydrogen, methane, iso-butane, propane]. (The square brackets respectively framing a respective group).

Using such different sensors has been proven so result in comparatively exact, reliable and reproducible predictions for food cooked or baked in the cavity 3, in particular without requiring inputting a cooking time and/or a priori knowledge of food type, weight and/or size.

An exemplary algorithm, based for example on a trained model, may include:
- acquiring sensor signals of the sensors of a senor arrangement while a cooking process is going on;
- pre-treatment of the sensor signals, including for example Loess-filtering, derivative processing (such as rate of change, noise reduction, etc.), and/or adaptive processing (such as adaptive filtering, self-calibration, dynamic range adjustment, adaptive signal processing, etc.);
- extracting features from the pre-processed signals;
- pattern recognition (e.g. based on a trained model, such as a trained support vector machine classifier, a supervised machine learning algorithm, a trained neuronal network etc.); and
- predicting a cooking state or cooking degree of the food (e.g. based on a response pattern of the signals).

In connection with the underlying invention, it has been found that the fan 11, in particular a fan 11 of a cooling system of the cooking appliance 1, is an advantageous, even optimal position for sensors of the types mentioned above. With such sensors (in particular of MOS-type), the sensor electronics may be damaged by the high temperature found in the oven cavity, if exposed directly to them. The cooling system, preferably comprising a channel with sheet metal walls, or plastic walls, and a cooling fan and fan motor enable sufficient cooling of the hot air sucked from the cavity so as to avoid heat-induced sensor damage.

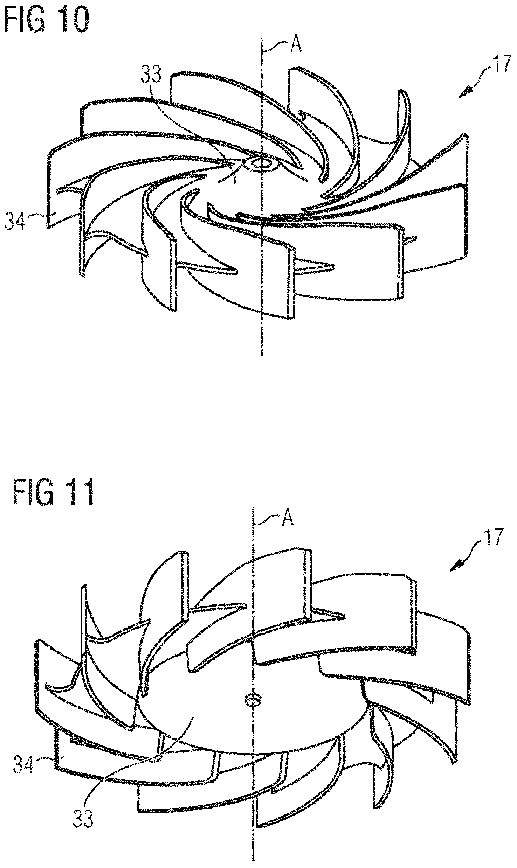

It has also been found that radial, in particular centrifugal fans are advantageous for use with the sensor assembly. A corresponding fan may be a double sided centrifugal fan comprising an impeller as shown in FIG. 10 and 11.

FIG. 10 shows a perspective view of an impeller 17 from a side facing the service compartment 8, and FIG. 11 shows a perspective view of an impeller 18 from a side facing the cavity 3. The impeller 17 comprises a central, substantially circular base 33. A plurality of blades 34 at project from the base 33, wherein the blades 33 are curved in a spiral like manner and extend from a central region of the central base outwards, wherein the central base 33 extends partially into the spaces between respectively adjacent blades 34, in particular for improving flow dynamics and for improving mechanical stability of the blades 34.

Such an impeller 17 is able to suck up a gas mixture both from the upper side and from the lower side, and blowing a corresponding air mixture radially (to an output port) relative to a plane perpendicular to the axis of rotation A. The impeller, according to the above examples, is located inside the fan housing 16. As shown in FIG. 1 to 4, the fan housing 16 is open near the axis or rotation A enabling the impeller 17 to suck air also from the service compartment 8, which generates a cooling airflow through the service compartment 8 for cooling electronics or other heat-sensitive components arranged therein, and at the same time is efficient for cooling down the temperature of air sucked from the cavity 3. As indicated above, with a (cooling) fan assembly as described in connection with the figures, hot air coming from the cavity 3 will mix with cool air service compartment 8, which is enables an airflow 19 with temperatures below 100° C, which is advantageous for the sensor array in terms of reduced temperature loads.

As shown in FIG. 3, hot air (A1) from the cavity 3 is sucked by the fan 11 and expelled into the exhaust duct 15. Parallelly, cool air A2 coming from the service compartment 8 is also sucked the fan 11. The resulting air flow 19 is expelled between the door 4 and control panel 10. Since the resulting air temperature will be lower than the temperature in the cavity, but the air mixture flow will still contain the substances or particles released by the food in the cavity while cooking, the areas for placement of the sensor assembly 12 as described above are particularly advantageous for sensor placement.

Regarding for example MOS sensors, such sensors would be damaged if directly exposed to hot air within the cavity or sucked from the cavity 3, due to the high temperature. The suggested fan arrangement is advantageous for avoiding such high temperatures, thereby enabling use of temperature sensitive sensors not suitable for ordinary temperatures in oven cavities.

Regarding the underlying invention, it is based on the fact that certain types of food, during cooking, release certain substances (Volatile Organic Compounds, VOC). Some sensor assemblies, e.g. MOS sensors, are sensitive to concentrations of such substances in a gas mixture. It has been found, that even if the air coming from the cavity is partially mixed with the air coming from the service compartment 8, the sensor can still effectively detect the presence of certain VOC, in particular if placed and arranged according to embodiments of the present disclosure.

Mixing the air from the cavity 3 with the air coming from the service embodiment 8 ensures that the temperature of the airstream 19 rests below the maximum tolerable temperature of the sensor electronics.

The sensor signal(s) may be processed in order to recognize a response pattern in the signal output from the sensor assembly. Such response pattern and/or an associated cooking level or cooking degree may be identified by means of a machine learning model (e.g. SVM classifier).

It has been found that a certain response pattern may be indicative of a state of doneness of the food. In particular a corresponding method proves to be effective on foods that develop a crust such as bread or bakery products.

In an example operation of a cooking appliance,
- A user may select a cooking program, such as a "bread baking" function
- The program or function may be started, and, for example, when preheating is completed, the user may put the food, suc as dough, inside the cavity 3, close the door, and the cooking cycle may be started.
- The sensor assembly 12 (e.g. a VOC-sensor-arrangement) for detecting VOC may be activated.
- Responsive to the VOC sensor detecting a certain response pattern, a pop-up may be shown in a user interface (of the oven or of another, e.g. mobile, device including a display), e.g. "food is ready", or "done" (or similar).
- Responsive to that, the cooking function may be then terminated or the heating elements may be activated/deactivated etc.

All the above is possible without the need for the user to set the cooking time at the beginning of the function.

In possible embodiments, after detecting the certain response pattern, the user may be asked if the cooking time should be extended (e.g. "add 5 minutes" option). If, for example, within a certain time period the user will not select anything, the oven will stop the cooking, avoiding burning of the food.

Compared to known solutions, the underlying invention provides a solution for cooking status prediction with gas sensors that avoids substantial modification to the oven architecture, or the addition of complex features. The sensor positions identified and described above and further above have been identified through extensive testing. Such positions have been proven optimal or ideal e.g. for an MOS sensor array, because it such positions, in accordance with the present disclosure, are impinged by a constant air flow coming from the cavity and spread by a fan, the airflow, even though diluted, mirroring the gas concentration of the cavity. The air flow is cool enough not to cause any problems to oven and sensor electronics, because it will get cooler along the path and it is mixed with air coming from the service compartment.

A further advantage compared to known solutions is that the sensor assembly suggested herein is able to detect a doneness level independently from the food size or quantity, without requiring, for example, additional sensors such as weight sensors etc.

### List of Reference Signs

- 1: cooking appliance
- 2: chassis
- 3: cavity
- 4: door
- 5: food
- 6: heating means
- 7: cavity interior
- 8: service compartment
- 9: control unit
- 10: control panel
- 11: fan
- 12: sensor assembly
- 13: insulation layer
- 14: exhaust port
- 15: exhaust duct
- 16: fan housing
- 17: impeller
- 18: drive motor
- 19: airstream
- 20: exit opening
- 21: first input port
- 22: second input port
- 23: exhaust duct wall section
- 24: sensing area
- 26: convection fan
- 27: output port
- 28: flowline
- 29: outer circumference of the impeller
- 30: sensor
- 31: outer housing
- 32: sniffer opening
- 33: central base
- 34: blade

- A: axis of rotation
- A1: air sucked from the cavity
- A2: air sucked from the service compartment
- D1: first distance
- D2: second distance
- E1: first end
- E2: second end
- L1: first fictitious line
- L2: second fictitious line
- M: air mixture
- P: virtual plane
- S1..S4: section
- TP1: first point
- TP2: second point
- Vt: tangential velocity

## Claims

1. A cooking appliance (1) comprising:
- a cooking cavity unit comprising a cooking cavity (3) having an exhaust port (14)
- a service compartment (8);
- a cooling fan assembly (11, 17, 18, 15); and
- a multivariate sensor assembly (12);
wherein:
- the service compartment (8) is arranged adjacent to an outer face of the cooking cavity unit;
- the cooling fan assembly (11, 17, 18, 15) is arranged in the service compartment (8) and comprises
- a cooling fan (11) air-fluidly connected to the exhaust port (14) for sucking air from the cooking cavity (3), and
- an exhaust duct (15) with one or more walls enclosing an exhaust channel that extends between the fan (11) and an exit opening (20) of the exhaust duct (15), the exhaust duct (15) being air-fluidly associated with the fan (11) such that, in operation, an airstream (M, 19) generated by the cooling fan (11) and including air sucked from the cooking cavity (3) through the exhaust port (14) passes through the exhaust channel and is exhausted via the exit opening (20) ;
- one wall of the one or more walls of the exhaust duct (15) comprises an exhaust duct wall section (23) that merges into the exit opening (20) with an outer side of the exhaust duct wall section (23) facing away from the cooking cavity unit; and
- the multivariate sensor assembly (12) is arranged in the exhaust duct wall section (23), with a sensing area (24) of the sensor assembly (12) directly facing the exhaust channel such that the airstream (M, 19) passes the sensing area (24) before exiting the exit opening (20).

2. The cooking appliance (1) of claim 1, wherein the multivariate sensor assembly (12) is configured to detect in the airstream (M, 19) generated by the cooling fan (11) in the exhaust channel at least two, three or more organic substances that are exhausted by a food item (5) during a cooking process into the cavity (3).

3. The cooking appliance (1) according to claim 1 or 2, further comprising a control unit (9), wherein a trained model is implemented on the control unit (9), the model trained based on a plurality of training data sets each providing, for respectively one or more food items (5), associations between a cooking degree of the one or more food items and related exhaust of one or more organic substances, the control unit (9) configured to receive sensor signals of the multivariate sensor assembly (12) and to determine a cooking degree for a food item (5) present in the cavity (3) during cooking based on the trained model using the signals as input data for the trained model.

4. The cooking appliance (1) according to any of the preceding claims, wherein the cooling fan (11) comprises a first input port (21) that is air-fluidly connected via the exhaust port (14) to the cavity (3), a second input port (22) that is air-fluidly connected to into the service compartment (8), and an output port (27), wherein the cooling fan (11) is configured such that, when in operation, air (A1) is sucked from the cavity (3) and service compartment (8) via the first and second input ports (21, 22), and an airstream (M, 19) comprising a mixture of air (A1, A2) sucked from the cavity (3) and the compartment (8) is generated through the exhaust duct (15), past the sensing area (24), and out of the exit opening (20) to the outer environment of the appliance (1).

5. The cooking appliance (1) according to any of the preceding claims, wherein the exhaust duct wall section (23) is tapered towards the exit opening (20), or the exhaust duct wall section (23) is provided in a tapered section of the exhaust duct (15).

6. The cooking appliance (1) according to any of the preceding claims, wherein the multivariate sensor assembly (12) is mounted near the exit opening (20).

7. The cooking appliance (1) according to at least claim 4, wherein the multivariate sensor assembly (12) is mounted such that a first distance (D1) between the fan (11) and the sensor assembly (12), in particular the sensing area (24), is equal to or larger than a second distance (D2) measured between the sensor assembly (12), in particular the sensing area (24), and the exit opening (20), the first and second distance (D1, D2) respectively measured along a centerline or flowline of the exhaust duct (15).

8. The cooking appliance (1) according to at least claim 7, wherein the first distance (D1) is at least twice, preferably at least three times as large as the second distance (D2).

9. The cooking appliance (1) according to any of the preceding claims, wherein the sensor assembly (12), preferably the sensing area (24), is located in a section of the exhaust duct (15), in which, during ordinary operation of the cooling fan (11), the airstream generated by the fan (11) and passing the section is substantially uniform or consistent, in particular smooth or laminar.

10. The cooking appliance (1) according to any of the preceding claims, wherein the sensor assembly (12), preferably the sensing area (24), is located in a section of the exhaust duct (15), in which, during ordinary operation of the cooling fan (11), a velocity of the airstream generated by the fan (11) through the exhaust duct (15) is at least one of in a range from 15% and 85%, and a range from 30% and 60% of a maximum airstream velocity within the exhaust duct (15).

11. The cooking appliance (1) according to any of the preceding claims, wherein the cooling fan (11) is a radial fan (11) with an impeller (17) with an axis of rotation (A) of the impeller (17) being perpendicular to a wall, preferably an upper wall, of the cavity (3), wherein a width of the exhaust duct (15), measured in a plane perpendicular to the axis of rotation (A), increases in a funnel-shaped, spiral manner from the output port (27) towards the exit opening (20), the exit opening (20) preferably extending substantially over the whole width of the appliance (1), wherein the sensor assembly (12), preferably the sensing area (24), is located in an area in which a curvature of flowlines of the airstream (M, 19) within the exhaust duct (15) and near the exit opening (20) is in a range from 0 to C_{med}, wherein C_{med} represents the average or median of airstream curvatures prevailing over the width of the exit opening (20) measured perpendicularly to the axis of rotation (A).

12. The cooking appliance (1) according to any of the preceding claims, wherein the cooling fan (11) is a radial fan with an impeller (17), with an axis of rotation (A) of the impeller (17) being perpendicular to a wall, preferably an upper wall, of the cavity (3), wherein a width of the exhaust duct (15), measured in a plane perpendicular to the axis of rotation (A) increases in a funnel-shaped, spiral manner from the output port (27) towards the exit opening (20), the exit opening (20) extending, preferably substantially over the whole width of the cooking appliance (1), and in a plane perpendicular to the axis of rotation between (A) a first end (E1) and a second end (E2), wherein the sensor assembly (12), in particular the sensing area (24), is located in a region located near the exit opening (20) and confined between a first and a second fictitious line (L1, L2), the first fictitious line (L1) being drawn, following a tangential velocity (Vt) of a tip of the impeller (17), from a first point (TP1) of an outer circumference of the impeller (17), or of a casing of the impeller (17), to the first end (E1), and the second fictitious line (L2) being drawn, following a tangential velocity (Vt) of a tip of the impeller (17), from a second point (TP2) of an outer circumference of the impeller (17), or the casing of the impeller (17), to the second end (E2), wherein the second point (TP2) is located downstream the first point (TP1) relative to the direction of rotation of the impeller (17).

13. The cooking appliance (1) according to any of the preceding claims, wherein the sensor assembly (12) comprises at least one metal-oxide-semiconductor (MOS) sensor.

14. The cooking appliance (1) according to at least claim 3, wherein the sensor assembly (12) comprises two or more sensor units (30) respectively configured for detecting at least one organic substance, and wherein the control unit (9) is configured to determine, based on the trained model, the cooking degree from on a response pattern originated from a combination of two or more signals of the sensor units (30).

15. The cooking appliance (1) according to any of the preceding claims, wherein the sensor assembly (12) is attached to an outer wall of the exhaust duct (15), and air-tightly overlaps or closes an opening in the outer wall, and wherein the sensing area (24) faces the interior of the exhaust duct (15) or projects into the exhaust duct (15).

16. The cooking appliance (1) according to at least claim 4, wherein the cavity (3) comprises a bottom wall, a top wall, three sidewalls connecting the bottom and top walls and a front opening, wherein:
- the service compartment (8) and the cooling fan assembly (11, 17, 18, 15) including the cooling fan (11) and exhaust duct (15), are arranged in a section above the top wall;
- the exhaust port (14) passes through the top wall and is connected to the first input port (21);
- the second input port (22) is air-fluidly connected to the service compartment (8),
wherein
- the exhaust duct (15) preferably extends substantially over the whole width of a front surface of the cooking appliance (1); and
- the exit opening (20) preferably opens into or at a space between an upper side of a front door (4) configured for closing the front opening and a lower side of a front panel, in particular control panel (10), covering a frontal side of the service compartment (8).
